# EUROPEAN PATENT APPLICATION

(11) **EP 4 733 013 A1**
(43) Date of publication of application: **29.04.2026**
(21) Application number: 25211069.7
(22) Date of filing: 24.10.2025
(51) Int. Cl.: B25J 9/16, B64G 1/24, G05B 17/02, B64G 7/00

(54) **SYSTEM AND METHOD FOR EMULATION OF DYNAMIC SYSTEMS IN VARIOUS GRAVITY ENVIRONMENTS**

(30) Priority: 25.10.2024 US 202463712296 P
(71) Applicant: MacDonald, Dettwiler and Associates Inc., Brampton, Ontario L6Y 6K7 (CA)
(72) Inventor: Serpelloni, Edoardo, Brampton, L6Y 6K7 (CA); Lucas, Robert, Brampton, L6Y 6K7 (CA); Aucoin, Robin, Brampton, L6Y 6K7 (CA)
(74) Representative: Mewburn Ellis LLP

(57) **Abstract**

Systems and methods of ground testing a position and orientation measurement and control system are provided. The method includes outputting control forces and torques by a position and orientation measurement and control system (POMCS) hardware unit mounted at a tip of a robotic manipulator configured to emulate a dynamic system in a selected gravity environment; sensing accelerations and velocities of the POMCS hardware unit in response to the control forces and torques; sensing forces and moments exchanged between the tip and the POMCS hardware unit in response to the control forces and torques; correcting the sensed forces and moments using the sensed accelerations and velocities to obtain compensated forces and moments; and using the compensated forces and moments in an emulation software package to produce a simulated inertial response of the dynamic system in the selected gravity environment.

## Description

### Technical Field

The following relates generally to designing, testing, and validating a dynamic system for space, and more particularly to systems and methods for emulation of a dynamic system in various gravity environments.

### Introduction

With advances in automation and artificial intelligence, robotic systems have emerged as an invaluable tool for emulating zero-gravity (0G) environments, non-inertial environments, and perturbed microgravity environments, allowing testing and optimization of dynamic systems such as satellites. Hardware systems of satellites, such as attitude determination and control systems ("ADCS") (or, more generally, position and orientation measurement and control systems), require rigorous testing to ensure optimal performance such environments. While there are numerous challenges in designing and validating satellites and other free-flying payloads for space operations, one of the most difficult is evaluating their dynamics and interactions in a simulated gravity environment other than that experienced on Earth.

Testing satellite hardware systems, such as an ADCS, is difficult because the hardware systems are designed to function in a microgravity environment. Currently, most ADCS test systems (such as an air bearing test bed) provide a reduced microgravity environment in a sense that it provides a microgravity-like environment with reduced degrees of freedom.

Accordingly, there is a need for an improved system and method for satellite emulation that overcomes at least some of the disadvantages of existing systems and methods.

### Summary

A system for emulation of a dynamic system in a selected gravity environment is provided. The system includes: a robotic manipulator configured to track a reference trajectory; a position and orientation measurement and control system (POMCS) payload attached to a tip of the robotic manipulator, the POMCS payload configured to output control forces and torques; a measurement system on the robotic manipulator for determining forces and moments exchanged between the tip and the POMCS payload in response to the output control forces and torques,; an inertial measurement system on the robotic manipulator for measuring translational accelerations (for example, translational accelerations) and velocities (for example, rotational velocities) of the POMCS payload at the tip; a computer system configured to: remove the inertial loads from the forces and moments using the accelerations and velocities to obtain corrected measurement data corresponding to the output control forces and torques; simulate a response of the dynamic system to the forces and moments in the corrected measurement data using a dynamic system emulator; and generate a reference trajectory for the robotic manipulator to track based upon the simulated response; and a robotic manipulator controller configured to generate arm and joint commands based upon the reference trajectory and communicate the arm and joint commands to the robotic manipulator.

In an embodiment, the robotic manipulator has enough degrees of freedom (DOFs) to move through cartesian space at the tip of the robotic manipulator.

In an embodiment, the measurement system includes a force moment sensor (FMS) or a virtual force moment sensor for measuring FMS data.

In an embodiment, the measured forces and moments include inertial loads corresponding to acceleration and velocity at the tip resulting from the POMCS payload at the tip.

In an embodiment, the forces and moments are calculated via impedance control.

In an embodiment, the inertial measurement system includes any one or more of an inertial measurement unit (IMU), a camera, or a sensor for measuring IMU data.

In an embodiment, the robotic manipulator is a 6 DOF robotic manipulator.

In an embodiment, the robotic manipulator is a 7 DOF robotic manipulator.

In an embodiment, the robotic manipulator is a serial manipulator.

In an embodiment, the serial manipulator is a robotic arm.

In an embodiment, the robotic manipulator is a parallel manipulator.

In an embodiment, the parallel manipulator is a Stewart platform.

In an embodiment, the system emulates a 0G environment.

In an embodiment, the system emulates a non-0G environment.

In an embodiment, the non-0G environment is the Moon.

In an embodiment, the non-0G environment is Mars.

In an embodiment, removing the inertial loads comprises fusing forces and moments data and the translational and velocities.

In an embodiment, fusing comprises subtracting the accelerations and velocities from the forces and moments.

In an embodiment, the position and orientation measurement and control system payload is a satellite attitude determination and control system (ADCS) payload.

In an embodiment, the PMOCS is an attitude and orbit determination and control system.

In an embodiment, the selected gravity environment is 0G.

In an embodiment, the selected gravity environment is perturbed microgravity.

In an embodiment, the selected gravity environment is 1G.

In an embodiment, the selected gravity environment is a form of gravity other than 0G, perturbed microgravity, or 1G.

In an embodiment, the dynamic system is a satellite.

In an embodiment, the dynamic system is a spacecraft other than a satellite.

A method of ground testing a position and orientation measurement and control system is also provided. The method includes: outputting control forces and torques by a position and orientation measurement and control system (POMCS) hardware unit mounted at a tip of a robotic manipulator configured to emulate a dynamic system in a selected gravity environment; sensing accelerations and velocities of the POMCS hardware unit in response to the control forces and torques; sensing forces and moments exchanged between the tip and the POMCS hardware unit in response to the control forces and torques; correcting the sensed forces and moments using the sensed accelerations and velocities to obtain compensated forces and moments; using the compensated forces and moments in an emulation software system to produce a simulated inertial response of the dynamic system in the selected gravity environment; and tracking the simulated inertial response with the robotic arm to emulate the behavior of the dynamic system in the selected gravity environment.

In an embodiment, the robotic manipulator is a serial manipulator.

In an embodiment, the robotic manipulator is a parallel manipulator.

In an embodiment, correcting the sensed forces and moments comprises fusing the sensed accelerations and velocities and the sensed forces and moments using a data fusion technique.

In an embodiment, correcting the sensed forces and moments comprises subtracting the sensed accelerations and velocities from the sensed forces and moments.

In an embodiment, the dynamic system is a satellite.

In an embodiment, the dynamic system is a spacecraft other than a satellite.

A system for ground testing dynamic systems for space is also provided. The system includes: a robotic manipulator including an measurement system and an inertial measurement system integrated at a tip of the robotic manipulator; a position and orientation measurement and control system (POMCS) hardware unit attached to the tip of the robotic manipulator and configured to output control forces and torques; a dynamic system emulator configured to simulate a motion behavior response of a dynamic system in a selected gravity environment in response to the output control forces and torques, wherein the response is simulated based on (a) forces and moments measured by the measurement system, (b) accelerations and velocities of the POMCS hardware unit measured by the inertial measurement system, and (c) mass properties of the POMCS hardware unit; an arm controller configured to generate a manipulator tip reference trajectory command based on the motion behavior response simulated by the dynamic system emulator and provide the manipulator tip reference trajectory command to the robotic manipulator; and an arm mechanism in the robotic manipulator configured to track a trajectory based on the manipulator tip reference trajectory command, such that the robotic manipulator emulates motion behavior of the dynamic system in the selected gravity environment.

In an embodiment, the dynamic system emulator is configured to adjust the effective mass of the dynamic system in a 1G environment.

In an embodiment, the selected gravity environment is 0G or perturbed microgravity.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a robotic testing system configured to emulate a free-floating satellite, according to an embodiment;
Figure 2 is a block diagram of a data processing pipeline implemented by the control software of Figure 1, according to an embodiment;
Figure 3 is a flow diagram of a method of emulating an inertial response of a 0G satellite, according to an embodiment; and
Figure 4 is a flow diagram of a method of emulating an inertial response of a 0G satellite, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms, or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to designing, testing, and validating a dynamic system for space, and more particularly to systems and methods for zero gravity satellite dynamic emulation.

The present disclosure may be used to test spacecraft position and orientation measurement and control systems. Examples of position and orientation measurement and control systems (POMCS) that may be used and tested by the present disclosure include attitude determination and control systems (ADCS), such as may be used by spacecraft or satellites that do not require orbit stationkeeping (e.g., cubesats), and attitude and orbit determination and control systems (AODCS), such as may be used by more generalized spacecraft that require orbit stationkeeping.

The present disclosure provides systems and methods for emulating 6 degrees of freedom (DOF) satellite dynamics in a zero-gravity environment. The systems and methods of the present disclosure may be used as a test bed or testing tool for verification and validation of ADCS for satellites or other spacecraft POMCS. It should be noted that while the systems and methods of the present disclosure may be used to emulate behavior of a dynamic system in 0G, such as a satellite, the systems and methods herein may also be used to emulate systems in other gravity fields (e.g., emulating the equations of motion in a rotating Euler-Hill reference frame, non-inertial environments, and perturbed microgravity environments) and such embodiments are expressly contemplated herein.

The systems and methods of the present disclosure may be particularly advantageous when used to emulate small satellites where the ADCS is a large component of the total system mass (i.e., because a bare minimum reduced system comprising just the ADCS would be of comparable mass to that of the complete satellite system).

In an embodiment, a 0G testing system is provided. The system includes a dynamic system position and orientation measurements and control system payload. The system further includes a robotic manipulator system. The payload is attached to a tip of the robotic manipulator system. In an embodiment, the payload is an AODCS, such as in the case of a generalized spacecraft that requires orbit stationkeeping. In another embodiment, the payload is an ADCS, such as in the case of a spacecraft that is simpler and does not perform orbit stationkeeping (such as a CubeSat).

The robotic manipulator may be a serial manipulator, such as a robotic arm. The robotic arm may be a 6 DOF robotic arm or a 7 DOF robotic arm. The robotic manipulator may be a parallel manipulator. The parallel manipulator may be a Stewart platform or the like. The robotic manipulator system includes a measurement system for determining forces and moments exchanged between the tip and the POMCS payload in response to the output control forces. The measurement system may include a force moment sensor (FMS) for measuring FMS data. The measurement system may include a virtual force moment sensor. The measurement system may include a force moment sensor (FMS). The forces and moments may be calculated via impedance control.

The robotic manipulator system includes an emulator computer system running a real-time simulation system that allows the robotic arm to replicate behavior of many dynamic systems by using feedback from the FMS. This includes emulating a 0G environment, a non-inertial environment, or a perturbed microgravity environment. The system further includes an inertial measurement system for measuring accelerations and velocities of the POMCS payload at the tip. The accelerations may be translational accelerations. The velocities may be rotational velocities. The inertial measurement system may include any one or more of an inertial measurement unit (IMU), a camera, or a sensor for measuring IMU data. The inertial system may estimate inertial loads generated when the robotic arm moves. The estimated inertial loads are fed to the emulator computer, which removes the estimated inertial loads from the FMS signal in order to isolate the control loads produced by the ADCS.

In an embodiment, a testing system is provided that emulates a dynamic system. The testing system includes a robotic arm configured to emulate 0G dynamics (the dynamic system), an emulator computer for generating an emulated response of the dynamic system, an FMS, and an IMU. The testing system further includes a physical ADCS unit that is attached to a tip of the robotic arm. By attaching the physical ADCS unit as a payload to the robotic arm, the actual ADCS mass is introduced into the system. When the robotic arm moves, inertial loads due to the mass of the ADCS are imparted onto the FMS and become part of the FMS reported signal. The FMS feeds the FMS signal with the sensed inertial loads to the emulator computer. If processed by the emulator computer, the emulator computer will interpret the sensed inertial loads in the FMS signal as actual forces to react to. The IMU estimates the inertial loads (introduced by presence of the payload mass) when the robotic arm moves. The IMU-estimated inertial loads are provided to the emulator computer. The emulator computer removes the IMU-estimated inertial loads from the FMS signal to obtain a compensated or corrected FMS signal that includes only the loads generated external to the system (e.g., by the ADCS). The loads generated external to the system transmitted through the FMS are control loads and/or disturbance loads provided as input to an emulator computer to enable the robotic arm to emulate a 0G environment. The compensated FMS signal is provided as input to a dynamic emulation module of the emulator computer. The dynamic emulation module generates an emulated 0G inertial response of the dynamic system being emulated. The emulator computer translates the emulated inertial response into a set of tip velocity commands. The tip velocity commands are sent from the emulator computer to the robotic arm. The robotic arm tracks the received tip velocity commands, thereby causing the robotic arm to accurately emulate the inertial response of the dynamic system in 0G to the control loads generated by the ADCS and any disturbance loads, effectively replicating the on-orbit behavior of a satellite.

While the present disclosure refers throughout to emulating 0G satellites and testing ADCS, the systems and methods may be used to emulate any other dynamic systems experiencing external control and/or disturbance loads. The 0G satellite with an ADCS is an embodiment of a dynamic system that can be effectively isolated from its gravitational environment in the lab and then subjected to representative external forces moderated through an emulated dynamics. The dynamic system may be any system that changes states under the influence of forces, torques, or other inputs. Examples of dynamic systems that may be emulated include satellites, deployable structures such as solar panels, robotic manipulators, and unmanned aerial vehicles (UAVs).

The systems and methods of the present disclosure may be used as a tool for emulating zero-gravity (0G) environments, non-inertial environments, and perturbed microgravity environments. An example of non-inertial environments applies to the relative dynamics of co-orbiting spacecraft. Typically, mission designers will define a reference orbit, and there will be incremental relative orbital forces that cause relative motion trajectories between objects. Such orbital forces are caused by an observer being in an accelerated (non-inertial) reference frame. The systems and methods described herein may be used to emulate such gravitational environments.

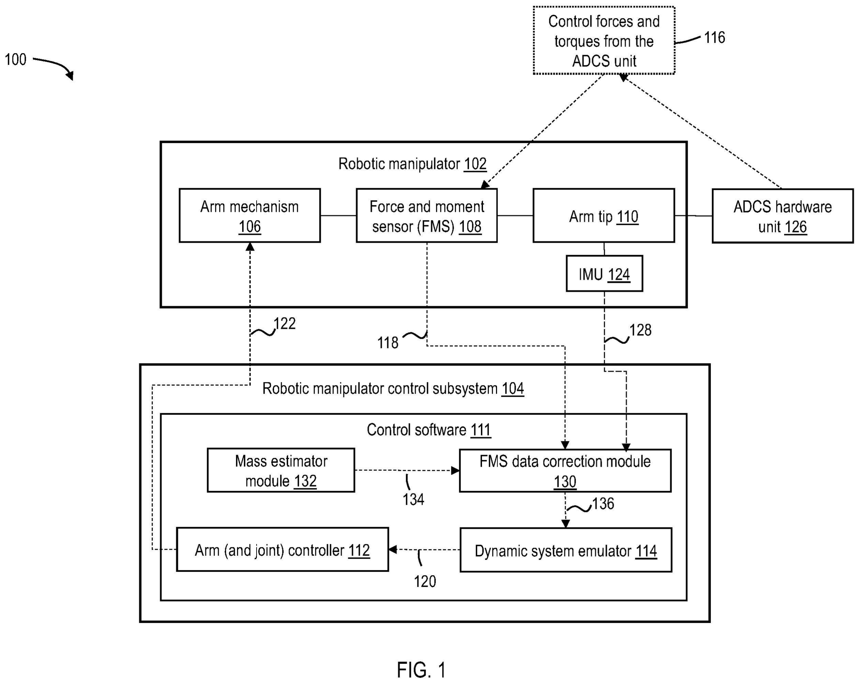

Referring now to Figure 1, shown therein is a testing system 100 for verifying and validating an attitude determination and control system (ADCS) for a satellite, according to an embodiment.

It should be noted that, more generally, system 100 may be used to emulate a 0G dynamic system which, in the case of Figure 1, is a 0G satellite. The system 100 may also be used to emulate a system in a gravity field, such as perturbed gravitational environments including gravity gradient or magnetic torques, or non-inertial environments including fictitious forces arising in an accelerated frame of reference (e.g., Clohessy-Wiltshire model of co-orbital reference motion).

The system 100 may be used as part of a ground testing process for evaluating the performance and behavior of ADCS to be used in space.

The robotic system 100 includes a robotic manipulator (also referred to as robotic arm in the case of serial robot manipulators) 102 and a robotic manipulator control subsystem 104. The robotic manipulator 102 may be configured to operate as a conventional 1G capable arm. In variations, the robotic manipulator 102 may be any robotic manipulator, such as a serial manipulator or parallel manipulator (e.g., Stewart platform). The robotic manipulator 102 has enough degrees of freedom (DOFs) to move through cartesian space at the tip. In some embodiments, the robotic manipulator 102 is a 6DOF robotic arm or a 7DOF robotic arm. A 7DOF robotic arm may provide greater operational flexibility. The robotic arm may have fewer DOFs (i.e., less than 6) if the application or test to be performed does not need to fully replicate the motion of the emulated system (e.g., satellite) in all directions and orientations.

Generally, in operation, the robotic manipulator 102 and robotic manipulator control subsystem 104 communicate with one another.

The robotic manipulator 102 includes an arm mechanism 106. The robotic manipulator 102 includes a measurement system that may include a force and moment sensor (FMS, or force torque sensor) 108. The robotic manipulator 102 includes an arm tip 110 (may also be referred to an end effector). The robotic manipulator 102 includes an inertial measurement system that may include an inertial measurement unit (IMU) 124.

The system 100 further includes an ADCS hardware unit (or payload) 126 attached to the arm tip 110. The ADCS 126 thus represents a mass at the arm tip 110. The ADCS 126 is a real hardware unit that is to be used to control a real satellite system in flight (i.e., the real satellite system that is being emulated by system 100). The ADCS unit 126 interacts directly with the robotic arm 102. The interactions are forces and moments induced by the ADCS unit 126 on the arm tip 110 when the ADCS unit 126 is operative. The forces and moments are sensed by the FMS 108. Generally, the system 100 may be used to test a hardware unit, such a ADCS 126, that outputs control loads for controlling movement of a larger system to be used in an environment having gravity less than 1G. For example, in another embodiment, the system 100 may be used to test an unmanned aerial vehicle (UAV) autopilot system (e.g., by attaching the UAV to the tip of the manipulator 102).

The ADCS 126 may include control hardware such as actuators and sensors and software (e.g., flight code). The actuators may include, for example, cold gas thrusters, control moment gyros, or reaction wheels. The sensors may include, for example, accelerometers or attitude sensors. The actuators and sensors may be mounted to the arm tip 110 via mechanical interface. The ADCS 126 outputs control forces and torques 116 via hardware and software components. In flight, the control forces and torques are intended to adjust attitude and positioning of the satellite serviced by the ADCS 126.

The FMS 108 and the IMU 124 are each integrated into the arm hardware of the robotic manipulator 102 at the arm tip 110. As the ADCS hardware unit 126 is coupled to the arm tip 110, it can be said that the ADCS 126 is forward of the FMS 108 in the chain.

The arm mechanism 106 includes an assembly of links and joints. The links are rigid sections of the arm mechanism 106 and joints are the connections between two links which allow restricted relative motion between the two connected links. The number of links and joints may vary depending on the application.

The arm mechanism 106 is configured to track a trajectory based on commands received from an arm controller (arm controller 112, described below). The arm mechanism 106 may also provide joint angle measurements to robotic manipulator control subsystem 104 (i.e., to the arm controller 112) for processing.

The FMS 108 senses the control forces and torques output by the ADCS 126, which will be used to update the arm 102 response to emulate the target satellite. The FMS 108 also senses inertial loads when the arm 102 and the satellite are moving. The FMS 108 is configured to measure all forces and moments 116 experienced by the robotic manipulator 102 at the arm tip 110. The FMS 108 measures the inertial loads and the forces and moments 116 exchanged between the arm tip 110 and the ADCS 126. The exchanged forces and moments are inertial forces and the loads generated by the ADCS 126 trying to rotate the satellite.

The FMS 108 provides the force and moment sensor measurements 118 to the robotic manipulator control subsystem 104.

It should be noted that the FMS 108 readings include inertial loads corresponding to accelerations (e.g., translational accelerations) at the arm tip 110 resulting from having mass (i.e., the ADCS 126) forward of the FMS 108 in the chain. The chain comprises, in order, the arm tip 110, then the FMS 108, then the IMU 124, and then the ADCS 126.

These inertial loads, due to the presence of the ADCS 126 at the arm tip 110, would not exist on the real satellite system at this measurement point on orbit. These inertial loads can be removed from the FMS signal using IMU acceleration readings and knowledge of the mass properties of the ADCS 126, as described further below. These inertial loads may also be referred to herein as "expected inertial readings".

The IMU 124 is configured to measure the accelerations and velocities of ADCS hardware unit 126 at the arm tip 110. The IMU 124 may be configured to measure the translational accelerations and rotational velocities of ADCS hardware unit 126 at the arm tip 110. The IMU 124 provides these measurements 128 to the robotic manipulator control subsystem 104.

The ADCS hardware unit 126 interfaces with the arm tip 110 while the robotic manipulator 102 emulates the dynamic system. The arm tip 110 may rotationally or translationally manipulate the ADCS hardware unit 126.

The robotic manipulator control subsystem 104 includes control software 111 which comprises an arm controller 112, a dynamic system emulator 114, an FMS data correction module 130 (or FMS data compensation module), and a mass properties estimator module 132.

The arm controller 112 provides arm and joint level commands (e.g., commands 122, described below) to the arm mechanism 106. The arm and joint level commands may be provided based on any one or more of inputs from external sensors, outputs from other controllers, and automated commands.

The mass estimator module 132 is configured to determine mass properties 134 of the ADCS hardware unit 126 in real-time. The mass properties 134 include mass plus first and second moment of inertia. Other than mass, the mass properties are nontrivial to estimate beforehand and usually affected by significant uncertainty. Real time estimation may improve the quality of the data used and allow for better compensation of the FMS signal. The mass estimator module 132 may execute a parameter estimation algorithm to determine the mass properties 134. The mass estimator module 132 may also include mass properties from CAD drawings or experimental testing of ADCS 126. However, such an approach may force re-estimation every time the ADCS test rig is changed.

The mass estimator module 132 provides the mass properties data 134 to the FMS correction module 130. While Fig. 1 shows the mass estimator module 132 as separate from the FMS data correction module 130, in other embodiments the mass estimator module 132 may be a component of or integrated into the FMS data correction module 130.

The FMS data correction module 130 receives the FMS measurements 118, mass properties 134 of the ADCS hardware unit 126, and the IMU measurements 128 corresponding to the translational accelerations and rotational velocities of the ADCS 126 at the arm tip 110 as input.

The FMS data correction module 130 first determines expected inertial readings data from the mass properties 134 and the IMU data 128. This may be done using a more configuration dependent version of mass × acceleration.

The FMS data correction module 130 then corrects or compensates the FMS data 118 by applying the expected inertial readings data to the FMS data 118 to obtain corrected FMS measurements 136. In an embodiment, this may include fusing the FMS data 118, IMU data 128, and expected inertial readings data. In an embodiment, fusing may include subtracting the expected inertial readings and IMU data 128 from the FMS data 118. In another embodiment, fusing may include additional signal filtering to compensate for noise.

The FMS data correction module 130 provides the corrected FMS data 136 to the dynamic system emulator 114.

The dynamic system emulator 114 comprises a simulator that can be configured to capture the dynamics of a desired electro-mechanical system. The dynamic system emulator 114 may be incorporated in software that controls a reference trajectory of the arm mechanism 106.

The dynamic system emulator 114 enables the arm tip 110 of the robotic manipulator 102 to replicate the behavior of a desired dynamical system. This may include, for example, emulating free floating dynamics of a spacecraft.

The dynamic system emulator 114 of system 100 is configured to emulate the dynamics of a free floating satellite. Satellites emulated by the dynamic system emulator 114 may include controlled and uncontrolled satellites of various inertias and geometries.

In an embodiment, emulated system (e.g., space manipulator, satellite) dynamics/kinematics may be coded in the dynamic system emulator 114 through Simulink or similar programming environment.

The dynamic system emulator 114 is configured to execute a dynamical system model. The dynamical system model may represent a mathematical model of the target behavior of the tip of the robotic manipulator 102.

In some cases, the dynamic system emulator 114 may be configured such that initial conditions can be provided to the dynamic system emulator 114. Initial conditions may be provided, for example, via user input data inputted via a user interface. The initial conditions can then be used by the dynamic system emulator 114 to determine an initial state of the dynamical system being simulated. In an example, initial conditions may be provided to the dynamic system emulator 114 assigning an initial desired drift rate to the robotic manipulator 102 when the dynamic system emulator 114 is configured to emulate dynamics of a free floating satellite.

Generally, when the system 100 is in operation, as the robotic manipulator 102 interacts with the ADCS hardware unit 126, the robotic manipulator 102 experiences forces and moments 116 which are measured by the FMS 108 at arm tip 110. The forces and moments 116 include translational accelerations and rotational velocities of the ADCS hardware unit 126 experienced by robotic manipulator 102 at arm tip 110. The translational accelerations and rotational velocities of the ADCS hardware unit 126 are measured by IMU 124.

The mass estimator module 132 executes a parameter estimation algorithm to determine the mass properties 134 of ADCS hardware unit 126 in real-time.

The FMS measurements 118, IMU measurements 128, and estimated mass properties 134 are provided to the FMS data correction module 130.

The FMS data correction module 130 determines expected inertial readings from the IMU measurements 128 and mass properties 134. The FMS data correction module 130 corrects the FMS data using the expected inertial readings to obtain corrected FMS data 136 (e.g., by subtracting the expected inertial readings or fusing the data).

The corrected FMS measurements 136 are used to drive internal simulation by the dynamic system emulator 114. The corrected FMS measurements 136 may be provided to the dynamical system model simulation as external disturbances. The dynamic system emulator 114 uses the dynamical system model to simulate the system's response to the forces and moments.

The output of the internal simulation performed by the dynamic system emulator 114 is then tracked by the arm mechanism 106 of the robotic manipulator 102. The system response determined by the dynamic system emulator 114 may be used to generate a reference trajectory for the arm mechanism 106 to track. For example, the dynamic system emulator 114 may produce the system response as a manipulator 102 tip reference command, which command 120 can be communicated to the arm controller 112. The reference command signal 120 is then tracked via arm and joint control action, through arm and joint commands 122 (based on the output of the dynamic system emulator 114) communicated from the arm controller 112 to the arm mechanism 106.

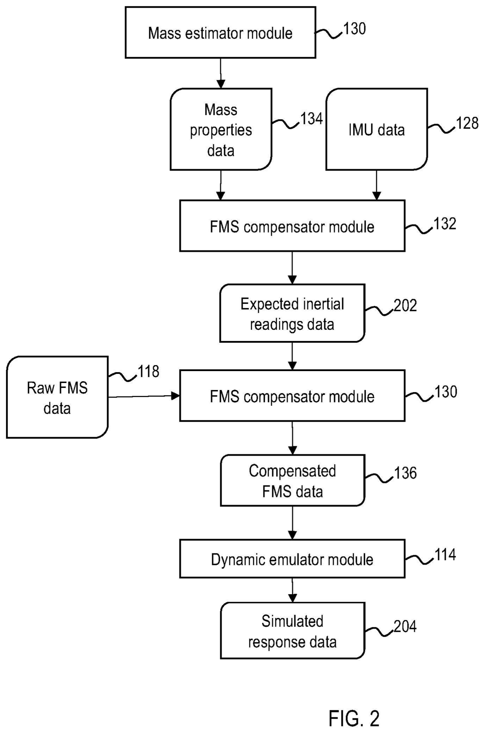

The flow of measurements and data in the system 100 is further illustrated in Figure 2, according to an embodiment. Figure 2 further shows expected inertial readings data 202 and simulated response data 204, which are referred to but not shown in Figure 1.

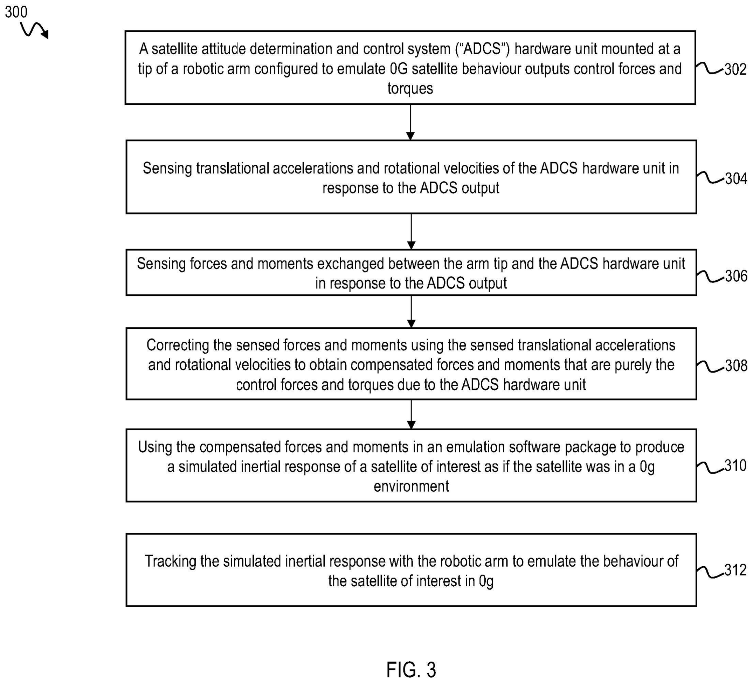

Referring now to Figure 3, shown therein is a method 300 of 0G satellite dynamic emulation, according to an embodiment.

Method 300 may be implemented by the system 100 of Figure 1.

At 302, an ADCS hardware unit mounted to a tip of a robotic arm outputs control forces and torques. The robotic arm is configured to emulate 0G satellite behavior.

At 304, the method 300 includes sensing accelerations and velocities of the ADCS hardware unit in response to the ADCS and arm output. The accelerations may be translational accelerations. The velocities may be rotational velocities. The translational accelerations and rotational velocities may be sensed using an IMU integrated into the hardware of the robotic arm at a tip of the robotic arm.

At 306, the method 300 includes sensing forces and moments exchanged between the arm tip and the ADCS hardware unit in response to the ADCS output. The forces and moments may be sensed using an FMS integrated into the hardware of the robotic arm at the tip.

At 308, the method 300 includes correcting the sensed forces and moments from 306 using the sensed translational accelerations and rotational velocities to obtain compensated forces and moments. The compensated forces and moments are purely the control forces and torques due to the ADCS hardware unit.

At 310, the method 300 includes using the compensated forces and moments in an emulation system of the robotic arm to produce a simulated inertial response of a satellite of interest as if the satellite was in a 0G environment.

At 312, the method 300 includes tracking the simulated inertial response with the robotic arm to emulate the behavior of the satellite of interest in 0G.

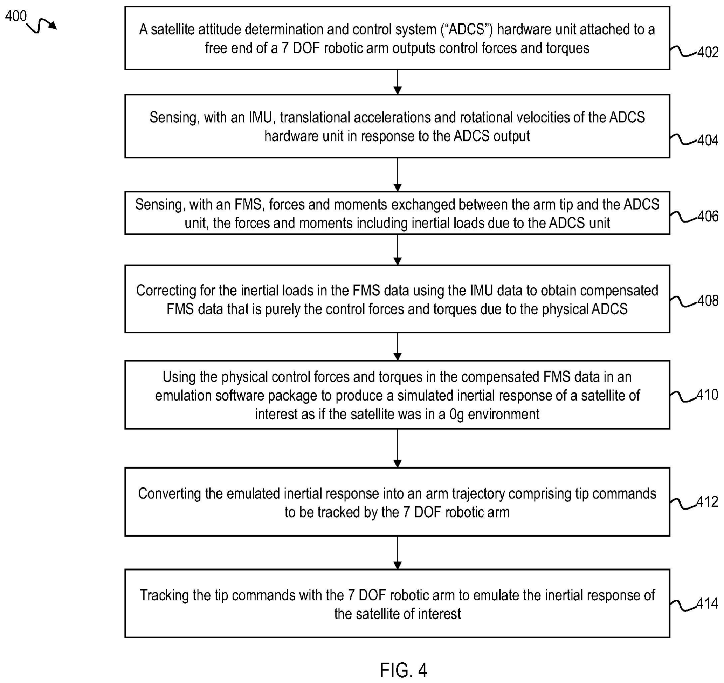

Referring now to Figure 4, shown therein is a method 400 of 0G satellite dynamic emulation, according to an embodiment.

Method 400 may be implemented by the system 100 of Figure 1.

At 402, an ADCS hardware unit attached to a free end of a 7 DOF robotic arm outputs control forces and torques.

At 404, the method 400 includes sensing, with an IMU, accelerations and velocities of the ADCS hardware unit in response to the ADCS output from 402. The accelerations may be translational accelerations. The velocities may be rotational velocities.

At 406, the method 400 includes sensing, with an FMS, forces and moments exchanged between the arm tip and the ADCS unit, which include inertial loads due to the presence of the ADCS hardware unit at the arm tip.

At 408, the method 400 includes correcting for the inertial loads in the FMS data using the IMU data to obtain compensated FMS data that is purely the control forces and torques due to the physical ADCS.

At 410, the method 400 includes using the physical control forces and torques in the compensated FMS data in an emulation software system to produce a simulated inertial response of a satellite of interest as if the satellite was in a 0g environment.

At 412, the method 400 includes converting the simulated inertial response into an arm trajectory comprising tip commands to be tracked by the 7 DOF robotic arm.

At 412, the method 400 includes tracking the tip commands with the 7 DOF robotic arm to emulate the inertial response of the satellite of interest.

It should be noted that while the foregoing description focuses on the testing of a satellite ADCS hardware unit, the systems and methods herein may be used to test other hardware control systems mounted to the tip of the robotic manipulator (either on its own, or as part of a larger mounted system) that output physical control loads to control motion of a larger system and emulate the response of the larger system in 0G or other gravitational environment. One such example is mounting a UAV to the tip of the manipulator and testing an autopilot system of the UAV. Another example is emulating different system dynamics within a 1G environment. The system may be configured to add or subtract effective mass/inertia to a given payload mounted to the tip of the manipulator via emulation.

While the above description provides examples of one or more apparatus, methods, or systems, it will be appreciated that other apparatus, methods, or systems may be within the scope of the claims as interpreted by one of skill in the art.

## Claims

1. A system for emulation of a dynamic system in a selected gravity environment, the system comprising:
a robotic manipulator configured to track a reference trajectory;
a position and orientation measurement and control system (POMCS) payload attached to a tip of the robotic manipulator, the POMCS payload configured to output control forces and torques;
a measurement system on the robotic manipulator for determining forces and moments exchanged between the tip and the POMCS payload in response to the output control forces and torques,
an inertial measurement system on the robotic manipulator for measuring accelerations and velocities of the POMCS payload at the tip;
a computer system configured to:
remove the inertial loads from the forces and moments using the accelerations and velocities to obtain corrected measurement data corresponding to the output control forces and torques;
simulate a response of the dynamic system to the forces and moments in the corrected measurement data using a dynamic system emulator; and
generate a reference trajectory for the robotic manipulator to track based upon the simulated response; and
a robotic manipulator controller configured to generate arm and joint commands based upon the reference trajectory and communicate the arm and joint commands to the robotic manipulator.

2. The system of claim 1, wherein the robotic manipulator has enough degrees of freedom (DOFs) to move through cartesian space at the tip of the robotic manipulator.

3. The system of claim 1, wherein the measurement system includes a force moment sensor (FMS) or a virtual force moment sensor for measuring FMS data.

4. The system of claim 1, wherein the measured forces and moments include inertial loads corresponding to acceleration and velocity at the tip resulting from the POMCS payload at the tip and/or wherein forces and moments are calculated via impedance control.

5. The system of claim 1, wherein the inertial measurement system includes any one or more of an inertial measurement unit (IMU), a camera, or a sensor for measuring IMU data.

6. The system of claim 2, wherein the robotic manipulator is any one of a 6 DOF robotic manipulator, a 7 DOF robotic manipulator, a serial manipulator, a robotic arm, a parallel manipulator, and a Stewart platform.

7. The system of claim 1, wherein the system emulates any one of a 0G environment, and a non-0G environment; wherein the non-0G environment is the Moon or Mars.

8. The system of claim 1, wherein removing the inertial loads comprises fusing the forces and moments and the accelerations and velocities, and/or wherein fusing comprises subtracting the accelerations and velocities from the forces and moments.

9. The system of claim 1, wherein the position and orientation measurement and control system payload is a satellite attitude determination and control system (ADCS) payload.

10. The system of claim 1, wherein the selected gravity environment is any one of 0G, perturbed microgravity, 1G, a form of gravity other than 0G, perturbed microgravity, or 1G.

11. The system of claim 1, wherein the dynamic system is a satellite or a spacecraft other than a satellite.

12. A method of ground testing a position and orientation measurement and control system of any one of claims 1 to 11, the method comprising:
outputting control forces and torques by the position and orientation measurement and control system (POMCS) hardware unit mounted at the tip of the robotic manipulator configured to emulate a dynamic system in a selected gravity environment;
sensing accelerations and velocities of the POMCS hardware unit in response to the control forces and torques;
sensing forces and moments exchanged between the tip and the POMCS hardware unit in response to the control forces and torques;
correcting the sensed forces and moments using the sensed accelerations and velocities to obtain compensated forces and moments;
using the compensated forces and moments in the emulation software system to produce a simulated inertial response of the dynamic system in the selected gravity environment; and
tracking the simulated inertial response with the robotic arm to emulate the behavior of the dynamic system in the selected gravity environment.

13. A system for ground testing dynamic systems for space, the system comprising:
a robotic manipulator including a measurement system and an inertial measurement system integrated at a tip of the robotic manipulator;
a position and orientation measurement and control system (POMCS) hardware unit attached to the tip of the robotic manipulator and configured to output control forces and torques;
a dynamic system emulator configured to simulate a motion behavior response of a dynamic system in a selected gravity environment in response to the output control forces and torques, wherein the response is simulated based on (a) forces and moments measured by the measurement system, (b) accelerations and velocities of the POMCS hardware unit measured by the inertial measurement system, and (c) mass properties of the POMCS hardware unit;
an arm controller configured to generate a manipulator tip reference trajectory command based on the motion behavior response simulated by the dynamic system emulator and provide the manipulator tip reference trajectory command to the robotic manipulator; and
an arm mechanism in the robotic manipulator configured to track a trajectory based on the manipulator tip reference trajectory command, such that the robotic manipulator emulates motion behavior of the dynamic system in the selected gravity environment.

14. The system of claim 13, wherein the dynamic system emulator is configured to adjust the effective mass of the dynamic system in any one of a 1G environment, 0G or perturbed microgravity.
